(19) Europäisches Patentamt
European Patent Office
Office européen des brevets

(11) Numéro de publication: **0 206 202 B1**

(12) # FASCICULE DE BREVET EUROPEEN

(45) Date de publication du fascicule du brevet: **02.08.89**

(51) Int. Cl.⁴: **H01M 4/62**, H01M 6/04

(21) Numéro de dépôt: **86108192.5**

(22) Date de dépôt: **16.06.86**

(54) **Procédé de stabilisation des générateurs électrochimiques primaires à anodes réactives en zinc, aluminium ou magnesium, anode stabilisée obtenue par ce procédé, et générateur comportant une telle anode.**

(30) Priorité: **18.06.85 FR 8509230**

(43) Date de publication de la demande:
**30.12.86 Bulletin 86/52**

(45) Mention de la délivrance du brevet:
**02.08.89 Bulletin 89/31**

(84) Etats contractants désignés:
**AT BE CH DE FR GB IT LI NL SE**

(56) Documents cités:
**DE-B-1 025 026**
**FR-A-2 226 756**
**US-A-3 847 669**

**CORROSION-NACE, vol. 34, no. 3, mars 1978, pages 98-109, National Association of Corrosion Engineers; R.L. LEROY: "Chelate inhibitors for zinc and galvanized products"**

(73) Titulaire: **SOCIETE LES PILES WONDER, 7-9, rue Paul Vaillant Couturier, F-92300 Levallois-Perret(FR)**

(72) Inventeur: **Vignaud, René, 17, avenue Anatole France, F-93600 Aulnay Sous Bois(FR)**

(74) Mandataire: **Weinmiller, Jürgen, Lennéstrasse 9 Postfach 24, D-8133 Feldafing(DE)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne les générateurs électrochimiques primaires, ou piles électriques, comportant des anodes très réactives en zinc, aluminium ou magnesium, notamment du type bioxyde de manganèse/zinc, oxyde d'argent/zinc, oxyde de mercure/zinc, air/zinc, chlorure d'argent/magnesium et air/aluminium, avec un électrolyte alcalin ou salin, tel qu'une solution aqueuse de potasse ou de chlorure de zinc et de chlorure d'ammonium respectivement, solution dans laquelle l'anode est corrodable.

Si de telles piles permettent d'obtenir des énergies élevées, elles présentent, du fait de la corrodabilité de leurs anodes réactives dans l'électrolyte alcalin ou salin, une stabilité assez réduite avec

- perte de la capacité de la pile au cours du stockage résultant d'une solubilisation partielle de l'anode dans l'électrolyte,
- dégagement continu et important d'hydrogène gazeux provoquant l'éjection d'électrolyte et le gonflement ou même parfois l'éclatement de la pile; l'importance de ces phénomènes nuisibles est accrue en cas d'élévation de la température, par exemple en cas de stockage dans un pays chaud.

Pour pallier ces inconvénients et stabiliser une pile du type précité, notamment à électrolyte alcalin, on a proposé de la stabiliser soit en incorporant du mercure dans l'anode (avec formation d'un amalgame) dans le cas du zinc, soit d'ajouter certains composés organiques.

On a tout d'abord proposé d'incorporer un certain pourcentage de mercure, par exemple de 5 à 15 % en poids par rapport au métal actif dans le cas où celui-ci est constitué par du zinc, notamment pour une pile à électrolyte alcalin.

En effet, le mercure présente la propriété d'accroître la surtension d'hydrogène du métal dans lequel il est incorporé (et ceci d'autant plus que sa concentration y est importante) en inhibant la réaction de réduction du proton.

Malheureusement le mercure et plus particulièrement ses composés sont toxiques. Ceci impose des mesures de sécurité strictes dans les processus de fabrication industrielle, et, par ailleurs, la dissémination des piles mises au rebut après usage constitue une cause de pollution dangereuse.

Il y a donc intérêt à éviter l'utilisation de mercure ou au moins à réduire la teneur en mercure des piles pour des raisons écologiques. D'ailleurs la réglementation tend à limiter progressivement cette teneur.

Mais une teneur en mercure par rapport au zinc dans l'anode inférieure à environ 3 % en poids ne procure pas une stabilité suffisante aux piles à électrolyte alcalin.

On a par ailleurs proposé d'ajouter à une pile à anode de zinc, aluminium ou magnesium, pour la stabiliser, un certain nombre de composés organiques, tels que la diéthanolamide de l'acide oléïque, le monolauryléther, des amines, des composés d'ammonium quaternaires et certains polymères de l'oxyde d'éthylène, pour remplacer, en totalité ou en partie, le mercure.

De tels composés n'assurent malheureusement pas une stabilité suffisante et sont eux-mêmes souvent d'em- ploi difficile ou d'efficacité réduite.

En ce qui concerne plus particulièrement les polymères d'oxyde d'éthylène, on peut citer le brevet US n° 3.847.669 et le brevet français n° 2.156.662 de la société Union Carbide, qui proposent d'ajouter, à une anode en zinc contenant moins de 8 % de mercure, un polymère d'oxyde d'éthylène, pris dans le groupe des di-, tri- et poly-éthylène glycols ayant un poids moléculaire moyen de 190 à 7000, leurs éthers d'alcoyle et leurs esters d'acides alcanoïques, ceci afin d'améliorer la stabilité des piles dotées de telles anodes. On préconise dans ces deux brevets la mise en œuvre de radicaux alcoyle ou alkanoate à 1 à 4 atomes de carbone.

D'un autre côté, la demanderesse a décrit dans la demande de brevet français nº 8 410 632, déposée le 4 juillet 1984 pour "Procédé de stabilisation des générateurs électrochimiques primaires à anodes réactives en zinc, aluminiuim ou magnesium et anode pour un tel générateur stabilisée par ce procédé", un procédé de stabilisation des générateurs électrochimiques primaires comportant au moins une anode réactive en un métal pris dans le groupe du zinc, de l'aluminium et du magnesium, caractérisé en ce qu'on ajoute à ladite électrode un pourcentage de 0,01% à 1% en poids, par rapport au métal, d'au moins un composé organique perfluoré du type fluoro-alcool éthoxylé.

Contrairement à ces enseignements, la demanderesse a maintenant découvert qu'il était possible de stabiliser une anode réactive en zinc, aluminium ou magnesium d'un générateur électrochimique primaire, à électrolyte alcalin ou salin, en incorporant à l'anode une très faible quantité (en général inférieure à 1% en poids par rapport au métal de l'anode) d'au moins un composé consistant en un sulfure d'alcoyle et d'alcool polyéthoxylé de formule

$$R{-}S{-}(CH_2)_2{-}(O{-}CH_2{-}CH_2{-})_n{-}OH$$

dans laquelle:

– R est un radical alcoyle, ramifié ou non ramifié, un radical aryle ou un radical alcoylaryle, et
– n est compris entre 2 et 100.

L'invention a donc pour objet:

a) un procédé de stabilisation d'un générateur électrochimique primaire comportant au moins une anode réactive en un métal pris dans le groupe du zinc, de l'aluminium et du magnesium, caractérisé en ce qu'on ajoute à ladite électrode un pourcentage de 0,001% à 1%, en poids, par rapport au métal, d'au moins un composé consistant en un sulfure d'alcoyle et d'alcool polyéthoxylé répondant à la formule

$$R{-}S{-}(CH_2)_2{-}(O{-}CH_2{-}CH_2{-})_n{-}OH$$

dans laquelle:
– R est un radical alcoyle, ramifié ou non ramifié, un radical aryle ou un radical alcoylaryle, et
– n est compris entre 2 et 100;

b) une anode stabilisée obtenue par ce procédé;
c) un générateur électrochimique primaire (pile électrique) comportant une telle anode.

De préférence:

– R est un radical alcoyle à environ 12 atomes de carbone, et/ou
– n est compris entre 2 et environ 20.

Dans les modes de réalisation préférés, le radical R est ramifié et il est notamment constitué par un radical tertiaire.

On peut mettre en œuvre un seul composé répondant à la formule (1) précitée ou bien un mélange des deux ou plusieurs composés répondant à cette formule.

De préférence on ajoute également à l'anode, lorsqu'elle est en zinc, du mercure, mais en une quantité relativement faible inférieure à 2% en poids par rapport au métal, notramment lorsqu'elle est destinée à un générateur à électrolyte alcalin.

Grâce à l'invention, on réduit la corrosion du métal de l'anode et on évite les diminutions de capacité de la pile au cours du stockage, le dégagement d'hydrogène, les fuites d'électrolyte et le gonflement de la pile, sans avoir recours à une addition de mercure ou, pour le moins, pour une électrode en zinc, avec une addition de mercure en une teneur réduite répondant aux normes et aux exigences écologiques.

L'invention pourra, de toute façon, être bien comprise à l'aide du complément de description qui suit, lequel complément est, bien entendu, donné surtout à titre d'indication.

A. Electrode de zinc pour pile, dite "alcaline" à électrolyte alcalin.

On prépare un mélange anodique, destiné à constituer l'électrode négative, ou anode, d'une pile, en introduisant successivement dans un mélangeur de la poudre de zinc amalgamée à 1 %, de la solution de potasse à 40 %, un agent gélifiant tel que la carboxyméthylcellulose, et l'inhibiteur selon l'invention, à savoir dans la proportion de 500 ml de solution de potasse et 50 g de carboxyméthylcellulose par kg de zinc amalgamé.

L'inhibiteur peut être réparti à la surface du zinc amalgamé en mettant en oeuvre un solvant non aqueux (tel que l'alcool éthylique ou l'acétone) que l'on évapore ensuite, ou en mélangeant l'inhibiteur à la solution de potasse.

La masse anodique ainsi obtenue est testée dans une solution de potasse 10 N à 45°C et on mesure la vitesse de corrosion en µl/g/jour (microlitre d'hydrogène CTPN par gramme de zinc et par jour). Une vitesse supérieure à 10 µl/g/jour est inacceptable dans un générateur électrochimique.

On sait en effet que la vitesse de corrosion (déterminée par le volume d'hydrogène dégagé par gramme d'échantillon et par jour, lorsque cet échantillon est immergé dans l'électrolyte en question) est largement utilisée pour le contrôle des échantillons amalgamés et montre une très bonne corrélation avec la conservation effective des générateurs électrochimiques. Pour accélérer le test on opère généralement à 45°C.

A titre de comparaison, une poudre de zinc non amalgamé a une vitesse de corrosion très nettement supé rieure à 10 µl/g/jour (de l'ordre de 2000 µl/g/jour), une poudre de zinc amalgamée à 0.2 % a une vitesse de corrosion de l'ordre de 200 µl/g/jour, à 1 % une vitesse de corrosion de l'ordre de 20 µl/g/jour, donc encore supérieure à 10 µl/g/jour, amalgamée à 5 % une vitesse de corrosion de 1,5 µl/g/jour environ, cette dernière étant acceptable dans la plupart des générateurs.

Exemples 1 à 4

L'inhibiteur est constitué par un composé selon la formule (1) dans laquelle R est le radical tertiododécyle, avec différentes valeurs de n :

Exemple 1 : n = 2
Exemple 2 : n = 7
Exemple 3 : n = 11
Exemple 4 : n = 20

La teneur en inhibiteur est dans chaque cas de 0,1 % en poids par rapport au zinc.

On a effectué des mesures de la vitesse de corrosion et on a trouvé en µl/g/jour :

- pour l'exemple 1 : 1,93
- pour l'exemple 2 : 1,57
- pour l'exemple 3 : 1,24
- pour l'exemple 4 : 1,07

Si on met en oeuvre également du mercure, c'est-à-dire si l'on utilise une poudre de zinc amalgamé à 0,2 % de mercure et 0,1 % d'inhibiteur selon les exemples 2 à 4, on a trouvé une vitesse de corrosion exprimée en µl/g/jour :

- pour l'exemple 2 : 4,6 µl/g/jour
- pour l'exemple 3 : 2,8 µl/g/jour
- pour l'exemple 4 : 1,9 µl/g/jour

Exemple d'application industrielle dans un générateur alcalin à électrode de zinc.

Des générateurs primaires, tels que décrits dans le brevet français n° 2.503.935 de la demanderesse, ont été montés en deux séries :

- l'une comportant une masse anodique composée de poudre de zinc amalgamé à 5 %, un électrolyte constitué par une solution de potasse à 40 % et un agent gélifiant (carboxyméthylcellulose), les proportions étant de 300 ml de solution de potasse et de 25 g de carboxyméthylcellulose par kg de zinc amalgamé;
- l'autre comportant, dans le même électrolyte et le même agent gélifiant, une masse anodique dont la poudre de zinc n'est amalgamée à qu'à 1 %, mais dans laquelle, au cours du mélange avec l'électrolyte et le gélifiant, on a introduit le composé (1) des exemples 1 à 4 précités dans la proportion de 0,1 % en poids par rapport au zinc.

Les deux séries ont été stockées pendant trois mois à 45°C. Au terme de cette période de stockage l'observation n'a montré aucune exsudation d'électrolyte à l'extérieur des piles due à une éventuelle surpression. Le démontage des piles a permis de constater qu'il n'y a eu aucune expansion du gel anodique. Enfin les éléments de ces deux séries, en module R 20, déchargés sur une résistance de 3,9 ohms en régime continu, présentent la même dispersion dans la durée de décharge : 59 h ± 1 h, c'est-à-dire qu'il n'y a aucune perte de capacité des piles de la seconde série par rapport à celles de la première.

Autre exemple d'application industrielle dans un générateur alcalin à électrode de zinc

Pour des applications industrielles en pile où l'électrode négative est constituée d'un gel dont la teneur en métal zinc est relativement faible, par exemple 48 à 52 % (en masse), par rapport à l'électrolyte, et pour lequel la teneur en mercure de l'alliage de zinc est également faible, par exemple inférieure à 1 %, on constate que l'on a intérêt pour maintenir les performances électriques, en particulier le niveau de tension, à abaisser la teneur en inhibiteur dans le gel anodique de la pile à moins de 0,01 % par rapport au zinc, soit entre 100 ppm et 10 ppm. Ainsi, pour un gel anodique comportant :
52 parties d'un alliage de zinc avec 100 ppm de cadmium et 1 % de mercure
pour 48 parties de solution KOH 8,5 N contenant 6 % de ZnO et 6 % de carboxy methyl cellulose,
50 ppm par rapport à l'alliage de zinc, d'un alcool dodecyl mercaptopolyethoxylé sont ajoutés au cours de la préparation du mélange, de préférence juste après l'amalgamation, et intimement mélangés.

Cette faible teneur entre 10 et 100 ppm d'inhibiteur peut égalment s'appliquer aux autres compositions de gel, en particulier celles qui sont plus riches en zinc, dès lors que l'on ne souhaite pas un excès de protection excessif contre la corrosion.

B. Electrode de zinc pour pile, dite "saline", à électrolyte salin.

Il est bien connu que les piles du type bioxyde de manganèse/zinc, dites "piles salines", utilisent un électrolyte composé d'une solution aqueuse de chlorure de zinc et de chlorure d'ammonium, dans laquelle l'électrode de zinc a tendance à se corroder pour former de l'hydrogène, ce qui a pour conséquence de provoquer des fuites d'électrolyte, par perforation du godet de zinc, et des pertes de capacité en stockage.

L'électrode de zinc de ces piles est constituée de métal en feuille, donc moins réactif que la poudre divisée des générateurs alcalins. Cette feuille de zinc n'est amalgamée qu'en surface, le poids de mercure par pile est par suite 1000 fois plus faible que celui qui est nécessaire pour les piles dites "alcalines" à électrolyte alcalin.

L'effet inhibiteur des composés selon l'invention est mis en évidence par le test de corrosion effectué à 45°C dans une solution saline comprenant 25 % en poids de $Cl_2Zn$, 25 % en poids de $NH_4Cl$ et le complément en eau.

L'utilisation d'éprouvettes de zinc en poudre présente l'avantage d'apporter une réponse rapide et statistiquement plus homogène. En effet, les languettes taillées dans un godet de pile présentent une grande hétérogénéité, de structure due aux lignes de filage du tube, et par suite une grande dispersion dans les réponses à l'essai de corrosion.

Le rapport des surfaces actives et par suite des vitesses de corrosion entre la poudre et la feuille est voisin de 5000.

On a obtenu les vitesses de corrosion suivantes:

a) électrode témoin sans mercure et sans l'inhibiteur selon l'invention 2000 µl/g/jour;
b) électrode avec 0,01 % en poids du composé (1) précité selon
l'exemple 2 327 µl/g/jour
l'exemple 3 170 µl/g/jour
l'exemple 4 136 µl/g/jour
c) électrode avec 5 % en poids de mercure 175 µl/g/jour

L'effet inhibiteur du sulfure d'alcoyle et d'alcool polyéthoxylé de la formule (1), selon l'invention, est très net, même en milieu salin.

Comme il va de soi et comme il résulte d'ailleurs déjà de ce qui précède, l'invention ne se limite nullement à ceux de ses modes d'application et de réalisation qui ont été plus spécialement envisagés; elle en embrasse, au contraire, toutes les variantes.

**Revendications**

1. Procédé de stabilisation d'un générateur électrochimique primaire comportant au moins une anode réactive en un métal pris dans le groupe du zinc, de l'aluminium et du magnesium, caractérisé en ce qu'on ajoute à ladite anode un pourcentage de 0,001% à 1% en poids par rapport au métal, d'au moins un composé consistant en un sulfure d'alcoyle et d'alcool polyéthoxylé répondant à la formule

$$R–S–(CH_2)_2–(O–CH_2–CH_2–)_n–OH$$

dans laquelle:
– R est un radical alcoyle, ramifié ou non ramifié, un radical aryle ou un radical alcoylaryle, et
– n est compris entre 2 et 100.

2. Procédé de stabilisation selon la revendication 1, caractérisé en ce que R est un radical alcoylé à 12 atomes de carbone.

3. Procédé de stabilisation selon la revendication 1 ou 2, caractérisé en ce que R est un radical ramifié, de préférence un radical tertiaire.

4. Procédé selon l'ensemble des revendications 2 et 3, caractérisé en ce que R est le radical tertiododécyle.

5. Procédé de stabilisation selon l'une quelconque des revendications précédentes, caractérisé en ce que n'est compris entre 2 et environ 20.

6. Procédé de stabilisation selon l'une quelconque des revendications précédentes, caractérisé en ce que l'anode, qui est en zinc, comporte du mercure en une quantité inférieure à 2% en poids par rapport au métal, notamment lorsqu'elle est destinée à un générateur à électrolyte alcalin.

7. Procédé de stabilisation selon l'une quelconque des revendications précédentes, caractérisé en ce que l'on met en œuvre un mélange de deux ou

plusieurs composés selon la formule (1) de la revendication 1.

8. Anode pour générateur électrochimique primaire obtenue par le procédé selon l'une quelconque des revendications précédentes.

9. Générateur électrochimique primaire à électrolyte alcalin, caractérisé en ce qu'il comporte une anode selon la revendication 8, notamment avec la limitation selon la revendication 6.

10. Générateur électrochimique primaire à électrolyte salin, caractérisé en ce qu'il comporte une anode selon la revendication 8.

8. Anode pour générateur électrochimique primaire obtenue par le procédé selon l'une quelconque des revendications précédentes.

9. Générateur électrochimique primaire à électrolyte alcalin, caractérisé en ce qu'il comporte une anode selon la revendication 8, notamment avec la limitation selon la revendication 6.

10. Générateur électrochimique primaire à électrolyte salin, caractérisé en ce qu'il comporte une anode selon la revendication 8.

## Patentansprüche

1. Verfahren zur Stabilisierung eines primären elektrochemischen Generators mit mindestens einer reaktiven Anode aus einem Metall der Gruppe Zink, Aluminium und Magnesium, dadurch gekennzeichnet, daß der Anode zwischen 0,001 und 1 Gewichtsprozent, bezogen auf das Metall, mindestens eines polyäthoxylierten Alkyl- und Alkoholsulfids gemäß der Formel

$R-S-(CH_2)_2-(O-CH_2-CH_2-)_n-OH$ (1)

zugefügt wird, wobei:
R ein verzweigtes oder nicht verzweigtes Alkylradikal, ein Arylradikal oder ein Alkylarylradikal ist, und
n einen Wert zwischen 2 und 100 besitzt.

2. Stabilisierungsverfahren nach Anspruch 1, dadurch gekennzeichnet, daß R ein Alkylradikal mit 12 Kohlenstoffatomen ist.

3. Stabilisierungsverfahren nach Anspruch 1 oder 2, dadurch gekennzeichnet, daß R ein verzweigtes Radikal, vorzugsweise ein tertiäres Radikal ist.

4. Stabilisierungsverfahren nach den Ansprüchen 2 und 3, dadurch gekennzeichnet, daß R das Radikal Tertiododecyl ist.

5. Stabilisierungsverfahren nach einem beliebigen der vorhergehenden Ansprüche, dadurch gekennzeichnet, daß n einen Wert zwischen 2 und 20 besitzt.

6. Stabilisierungsverfahren nach einem der vorhergehenden Ansprüche, dadurch gekennzeichnet, daß die Zinkanode Quecksilber in einer Menge unterhalb von 2 Gewichtsprozent bozogen auf das Metall aufweist, insbesondere wenn sie für einen Generator mit alkalischem Elektrolyten bestimmt ist.

7. Stabilisierungsverfahren nach einem beliebigen der vorhergehenden Ansprüche, dadurch gekennzeichnet, daß ein Gemisch aus zwei oder mehreren Verbindungen der Formel (1) gemäß Anspruch 1 eingesetzt wird.

8. Anode für einen primären elektrochemischen Generator, hergestellt mit Hilfe des Verfahrens gemäß einem der vorhergehenden Ansprüche.

9. Elektrochemischer Primärgenerator mit alkalischem Elektrolyten, dadurch gekennzeichnet, daß er eine Anode nach Anspruch 8 aufweist, insbesondere mit der Einschränkung gemäß Anspruch 6.

10. Elektrochemischer Primärgenerator mit saurem Elektrolyten, dadurch gekennzeichnet, daß er eine Anode gemäß Anspruch 8 besitzt.

## Claims

1. A method for stabilizing a primary electrochemical generator comprising at least one reactive anode made of a metal selected from the group consisting of zinc, aluminum and magnesium, characterized in that at least one compound consisting of an alkyl and of polyethoxylized alcohol sulfide of an amount ranging between 0,001% and 1% by weight of the electrode metal is added to this anode, corresponding to the formula:

$R-S-(CH_2)_2-(O-CH_2-CH_2-)_n-OH$ (1)

in which:
– R is an alkyl radical, ramified or not, or an aryl radical, or an alkylaryl radical; and
– n is chosen between 2 and 100.

2. A stabilization method according to claim 1, characterized in that R is an alkyl radical having 12 carbon atoms.

3. A stabilization method according to one of claims 1 and 2, characterized in that R is a ramified radical, and preferably a tertiary radical.

4. A stabilization method according to claims 2 and 3, characterized in that R is a tertiododecyl radical.

5. A stabilization method according to any one of the preceding claims, characterized in that n is chosen between 2 and about 20.

6. A stabilization method according to any one of the preceding claims, characterized in that the anode, which is made of zinc, comprises mercury in a quantity smaller than 2% by weight of the metal, in particular when it is intended for use in a generator with an alkaline electrolyte.

7. A stabilization method according to any one of the preceding claims, characterized in that use is made of a mixture of two or more compounds corresponding to the formula (1) of claim 1.

8. An anode for a primary electrochemical generator obtained by way of the method according to any one of the preceding claims.

9. A primary electrochemical generator with an alkaline electrolyte, characterized in that it includes an anode according to claim 8, in particular featuring the limitation according to claim 6.

10. A primary electrochemical generator with a saline electrolyte, characterized in that it includes an anode according to claim 8.